# EUROPEAN PATENT SPECIFICATION

(11) **EP 3 347 232 B1**
(45) Date of publication and mention of the grant of the patent: **11.03.2020**
(21) Application number: 15817605.7
(22) Date of filing: 14.10.2015
(51) Int. Cl.: B60N 2/015, B60N 2/42, B60N 2/433

(54) **RIGID SAFETY ASSEMBLY FOR REAR SEATS**
STARRE SICHERHEITSANORDNUNG FÜR RÜCKENSITZE
ENSEMBLE DE SÉCURITÉ RIGIDE POUR SIÈGES ARRIÈRES

(30) Priority: 09.09.2015 TR 201511220
(43) Date of publication of application: 18.07.2018
(73) Proprietor: Tofas Turk Otomobil Fabrikasi Anonim Sirketi, Bursa (TR)
(72) Inventor: AKCAY, Serhat, Osmangazi/Bursa (TR); IMAMOGLU, Mumin, Osmangazi/Bursa (TR); ESMEN, Zeynep, Osmangazi/Bursa (TR)
(74) Representative: Dericioglu, E. Korhan
(86) International application number: PCT/TR2015/050137
(87) International publication number: WO 2017/044054

(56) References cited:
- EP-A1- 1 407 923
- WO-A1-2011/112462
- FR-A1- 2 500 383
- FR-A1- 2 812 250
- FR-A1- 2 850 614
- FR-A1- 2 863 217
- JP-U- S5 812 028

## Description

### Field of the Invention

The present invention relates to a rear seat safety assembly which prevents displacement of the seat from where it is fixed due to the loads acting on the vehicle rear seats.

### Background of the Invention

There are vehicle seat systems in passenger vehicles which enable the drivers and passengers to be comfortably seated in the vehicle and to travel comfortably while seated. The seat systems are provided as front seats and rear seats in the vehicle. The front seats are intended for a single person and are positioned near the vehicle front panel while the rear seats are in a form allowing a plurality of persons to be seated and are positioned at the end of the vehicle trunk. Vehicle seats are fixed on the floor surface on the vehicle chassis such that they are near to each other. For fixing process, supports are used whose one end is fixed to the vehicle seat frame while the other end is fixed to the vehicle surface.

Considerably thick profiles are used for fixing the vehicle seat onto the floor surface due to the fact that the width distances of the vehicle rear seats are large to allow a plurality of people to be seated. The vehicle weight increases with the thick profiles that are used and consequently vehicle performance is affected adversely. Furthermore, in cases where the loads in the vehicle trunk hit the vehicle rear seat and an overload acts on the seat in case of emergency braking, the rear seats may get broken from the support points through which they are fixed.

A part of the safety members used in the market for solution of the current problem is fixed to the seat frame, while the other part thereof is fixed onto the vehicle floor surface and extends towards the vehicle trunk. In the safety assembly formed to extend towards the trunk, the safety members occupy space on the trunk volume. Furthermore, the safety members, which are single-piece and which do not move, decrease seat comfort by not allowing small amounts of stretching that may occur on the seat frame, and can easily get broken from the places to which they are connected depending on the acting forces.

Patent document FR2812250 relates to a retaining system for automobile removable seat comprises anchoring part, fixed to floor, with cut-out in upper wall having tongue, and bracket fixed to seat, having lower end foot penetrating cut-out and finger inserted under tongue. The system comprises an anchoring part fixed to the vehicle floor and a bracket fixed to the seat. The anchoring part comprises an upper wall in which there is a cut-out whose front edge comprises a tongue (44), and a cavity in a body (42) under the upper wall. At the lower end of the bracket is a foot (34) which penetrates into the cut-out and which comprises a finger (36) inserted in under the tongue.

Patent document EP1407923 relates to an inertia lock device and foldable sheet. An inertia lock device comprising a receiving block having a substantially U-shaped, obliquely upwardly opened receiving port for receiving the lower portion of a stand leg, a jaw portion projecting from a latch base to enter the receiving port through the bottom side thereof, a hook portion projecting from an upper arm into a bight.

### Problems Solved by the Invention

The objective of the present invention is to provide a rear seat safety assembly which prevents the vehicle seats from getting displaced from where they are fixed as a result of forces or stresses.

Another objective of the present invention is to provide a rear seat safety assembly which is activated only when a force acts on the vehicle seat.

A further objective of the present invention is to provide a rear seat safety assembly which is in a form that can engage to the vehicle seat frame.

Another objective of the present invention is to provide a rear seat safety assembly which supports the vehicle seat without occupying space in the trunk volume.

### Detailed Description of the Invention

The rear seat safety assembly developed to fulfill the objective of the present invention is illustrated in the accompanying figures, in which:

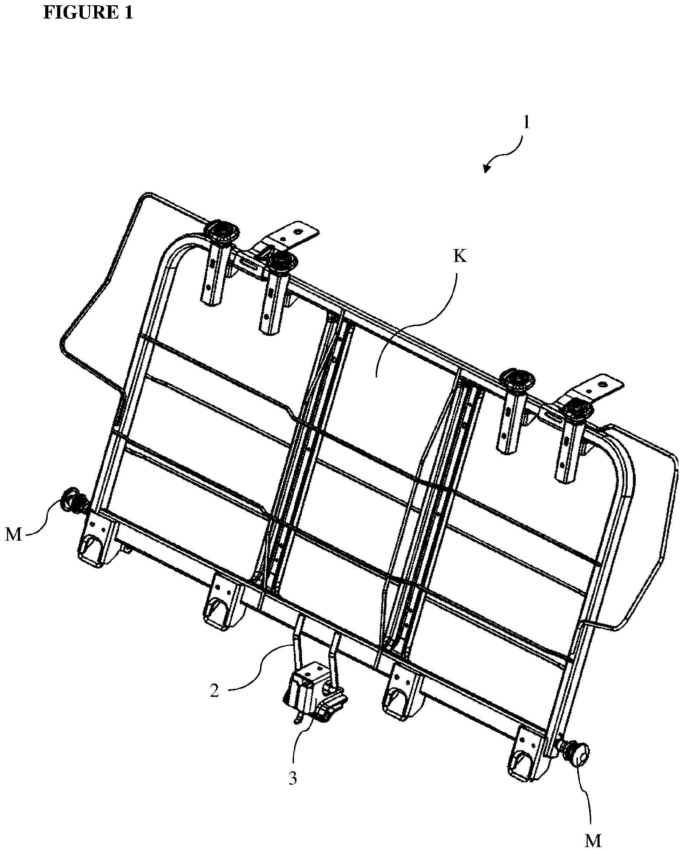

**Figure 1** is a perspective view of the rear seat safety assembly of the present invention when it is mounted to the seat frame.

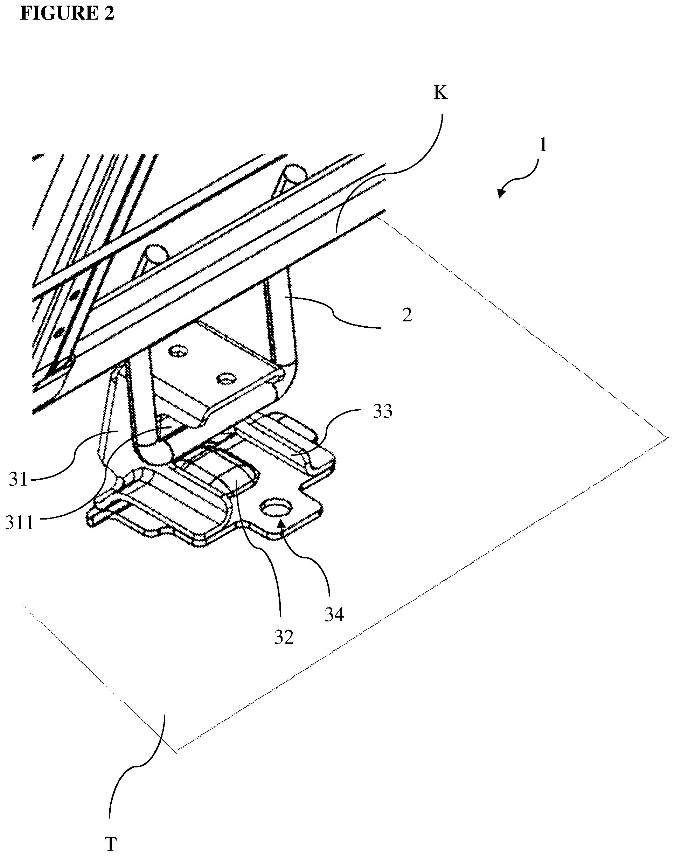

**Figure 2** is a front perspective view of the rear seat safety assembly of the present invention.

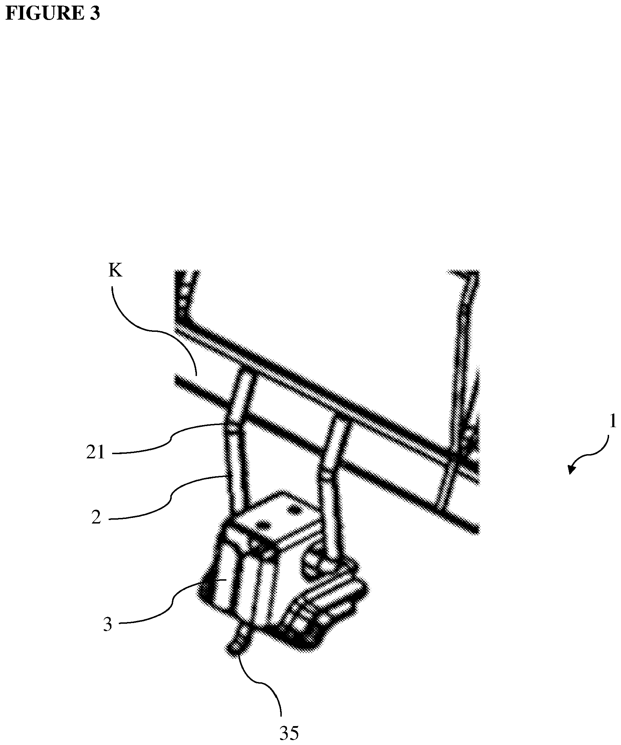

**Figure 3** is a rear perspective view of the rear seat safety assembly of the present invention.

The components shown in the figures are each given reference numbers as follows:
**1.** Rear seat safety assembly
**2.** Connecting member
   **21.** Guiding inclination
**3.** Fixed member
   **31.** Body
   **311.** Recess
   **32.** Pad
   **33.** Curved structure
   **34.** Fixing hole
   **35.** Fixing protrusion
**K.** Seat frame
**M.** Support
**T.** Chassis floor

The rear seat safety assembly (1), which prevents displacement of the seat from the chassis floor (T) due to the loads acting on the vehicle seat frames (K), essentially comprises
- at least one connecting member (2), which is connected from one side thereof to the part of the seat frame (K) near the chassis floor (T), and which extends from the seat frame (K) to which it is connected towards the chassis floor (T),
- at least one guiding inclination (21) which is formed on the connecting member (2) by a bending process and which enables it to extend towards the chassis floor (T) at a different angle,
- at least one fixed member (3) which is fixed on the chassis floor (T) so as to allow the connecting member (2) to be fitted thereon and which comprises
   - at least one body (31) which includes at least one recess (311) that allows the connecting member (2) to pass through and is in a size larger than the connecting member (2),
   - at least one pad (32) which is in the form of a hump located at a part of the body (31) near the chassis floor (T) and to which the connecting member (2) hits when it moves towards the chassis floor (T),
   - at least one curved structure (33) which forms a more resistant structure on the surfaces of the body (31) corresponding to the chassis floor (T) and which is in the form of a bend at the parts of the body (31) contacting the chassis floor (T),
   - at least one fixing hole (34) which is in the form of a hole located on the surface where the body (31) contacts the chassis floor (T) and which enables the body (34) to be fixed onto the chassis floor (T) by means of the connecting elements passing therethrough,
   - at least one fixing protrusion (35) which is in the form of an extension that extends from the body (31) towards the chassis floor (T) and which enables the body (31) to be fixed onto the chassis floor (T) by getting engaged onto the chassis floor (T).

The rear seat safety assembly (1) of the present invention comprises a fixed member (3), which is fixed to the chassis floor (T), and a connecting member (2), whose one part is fixed to the vehicle seat and the other part of which passes through the fixed member (3) thereby transferring the force onto the fixed member (3) when required. The recess (311) provided on the fixed member (3) is larger than the space required for passage of the connecting member (2). Thus, when an additional load does not act on the vehicle frame (K), the connecting member (2) does not contact the fixed member (3). The rear seat safety assembly (1) is activated when any load acts on the vehicle seat. When a load heavier than a specific load acts on the seat frame (K), the connecting member (2), which moves together with the seat frame (K), moves within the recess (311), and upon hitting the body (31) transfers the forces acting on the seat frame (K) to the vehicle chassis via the fixed member (3).

The connecting member (2) provided in the rear seat safety assembly (1) of the present invention is U-shaped. It is fixed to the seat frame (K) from its end parts that form the U shape and fits into the fixed member (3) from the area where the end parts unite. The guiding inclination (21) provided at the area where connecting member (2) extends over the seat frame (K) is in the form of a bend and enables the connecting member (2) to extend towards the desired direction.

By means of the bend-shaped guiding inclination (21) formed on the connecting member (2), the connecting member (2) extends towards between the vehicle seat and the chassis floor (T) and thus the connecting member (2) is prevented from occupying space in the trunk volume; and the desired height adjustment can be made in the recess (311) provided on the body (31).

The fixed member (3) provided on the rear seat safety assembly (1) of the present invention does not occupy space in the vehicle trunk volume since it is located between the vehicle seat and the chassis floor (T). The recess (311) that is formed is located on the body (31) at the part of which is farther away from the vehicle trunk section, and thus the connecting member (2) together with the guiding inclination (21) provided thereon extends towards between the vehicle frame (K) and the vehicle chassis floor (T) and fits into the recess (311) provided on the body (31).

In one embodiment of the invention, there is a pad (32), which is located on the fixed member (3), in the form of a hump on the surface of the recess (311) that is near the chassis floor (T). By means of the recess (311) with the pad (32), the connecting member (2) is prevented from hitting the body (31) harshly and thus deformation that might occur on the body (31) is prevented.

In one embodiment of the invention, the body (31) includes a curved structure (33) on the chassis floor (T). By means of the curved structure (33), a bent structure is formed on the walls of the body (31) extending from the chassis floor (T), and the surfaces of the body (31) extending from the chassis floor (T) become stronger by means of this bent structure.

In one embodiment of the invention, the body (31) is fixed to the chassis floor (T) by means of the fixing hole (34) and the bolt passing through the fixing hole (34) and the chassis floor (T). The fixing hole (34) located on the surface of the body (31) contacting the chassis floor (T) complies with the bolt.

According to the invention, there is provided a fixing protrusion (35) which extends from the surface of the body (31) contacting the chassis floor (T) towards the chassis floor (T). The fixing protrusion (35) extending in an L shape passes through the hole on the chassis floor (T) and enables the body (31) to be fixed on the chassis floor (T).

In one embodiment of the invention, the fixing hole (34) and fixing protrusion (35) are used together for fixing the body (31). For fixing the body (31), first of all the fixing protrusion (35) passes through a hole on the chassis floor (T) and after fixing the body (31)from one side thereof, a bolt passing through the fixing hole (34) is tightened whereby fixation of the body (31) becomes sturdier.

In one embodiment of the invention, the pad (32) located on the recess (311) is formed from a plastic material. By means of this plastic structure that is formed, the intensity of the connecting member (2) hitting the pad (32) decreases and deformation and formation of noise during hitting are prevented.

In one embodiment of the invention, there is a clips system which forms a lock system on the recess (311) during passing of the connecting member (2). By means of the clips system which is formed by springs and balls in the pits formed in the recess (311), when the connecting member (2) is passing through the recess (311), it fits in (engages) through the clips system via a certain amount of force and can be removed from the recess (311) by exerting a certain amount of force.

## Claims

1. A rear seat safety assembly (1), which prevents displacement of the seat from the chassis floor (T) due to the loads acting on the vehicle seat frames (K) and comprising,
- at least one connecting member (2), which is connected from one side thereof to the part of the seat frame (K) near the chassis floor (T), and which extends from the seat frame (K) to which it is connected towards the chassis floor (T),
- at least one guiding inclination (21) which is formed on the connecting member (2) by a bending process and which enables the connecting member (2) to extend towards the chassis floor (T) at a different angle
- at least one fixed member (3); which is positioned on the chassis floor (T) where the connecting member (2) extends, and which comprises at least one body (31) which includes at least one recess (311) that is formed is located on the body (31) at the part of which is farther away from the vehicle trunk section and that allows the connecting member (2) to pass through and is in a size larger than the connecting member (2); and which transfers the forces coming from the connecting member (2) to the vehicle chassis, and **characterized by**
- at least one fixing protrusion (35) which is in the form of an extension that extends from the body (31) towards the chassis floor (T) and which enables the body (31) to be fixed onto the chassis floor (T) by getting engaged onto the chassis floor (T),
- Said fixing protrusion (35) extending in an L shaped and passes through the hole on the chassis floor (T) and enables the body (31) to be fixed on the chassis floor (T).

2. A rear seat safety assembly (1) according to Claim 1, **characterized by** at least one pad (32) which is in the form of a hump located at a part of the body (31) near the chassis floor (T) and to which the connecting member (2) hits when it moves towards the chassis floor (T).

3. A rear seat safety assembly (1) according to Claim 1, **characterized by** at least one at least one curved structure (33) which is in the form of a bend at the parts of the body (31) contacting the chassis floor (T) and which forms a more resistant structure on the surfaces of the body (31) corresponding to the chassis floor (T).

4. A rear seat safety assembly (1) according to Claim 1, **characterized by** at least one fixing hole (34) which is in the form of a hole located on the surface where the body (31) contacts the chassis floor (T) and which enables the body (34) to be fixed onto the chassis floor (T) by means of the connecting elements passing therethrough.

5. A rear seat safety assembly (1) according to Claim 4, **characterized in that** the connecting element passing through the fixing hole (34) is a bolt.

6. A rear seat safety assembly (1) according to Claim 1, **characterized by** the connecting member (2) which is connected to the vehicle frame (K) from two ends thereof and which is in a U-shape when the two ends extending from the vehicle frame (K) to which it is fixed towards the chassis floor (T) unite.

7. A rear seat safety assembly (1) according to Claim 2, **characterized in that** the pad onto which the connecting member hits is made of plastic material.

8. A rear seat safety assembly (1) according to Claim 1, **characterized by** the clips system which is placed on the recess (311) and which prevents the connecting member from getting displaced from the recess in small intense movements.

## Patentansprüche

1. Rücksitz-Sicherheitsanordnung (1), die eine Verschiebung des Sitzes vom Fahrgestellboden (T) aufgrund der auf die Fahrzeugsitzrahmen (K) wirkenden Lasten verhindert und Folgendes umfasst,
- mindestens ein Verbindungselement (2), das von einer Seite davon mit dem Teil des Sitzrahmens (K) in der Nähe des Fahrgestellbodens (T) verbunden ist, und das sich von dem Sitzrahmen (K), mit dem es verbunden ist, zum Fahrgestellboden (T) hin erstreckt,
- mindestens eine Führungsneigung (21), die am Verbindungselement (2) durch ein Biegevorgang gebildet wird und die es ermöglicht, dass das Verbindungselement (2) in einem anderen Winkel zum Fahrgestellboden (T) hin erstreckt
- mindestens ein fixiertes Element (3); das auf dem Fahrgestellboden (T) positioniert ist, wo sich das Verbindungselement (2) erstreckt, und das mindestens einen Körper (31) umfasst, der mindestens eine Aussparung (311) aufweist, die an dem Körper (31) gebildet ist, an dessen Teil, der weiter vom Fahrzeug-Kofferraumabschnitt entfernt ist, und und der das Verbindungselement (2) durchgehen lässt und eine größere Größe als das Verbindungselement (2) hat; und das die vom Verbindungselement (2) kommenden Kräfte auf das Fahrzeugfahrgestell überträgt, und
**gekennzeichnet durch**
- mindestens einen Fixiervorsprung (35), der in die Form einer Erweiterung ist, die sich von der Körper (31) zum Fahrgestellboden (T) hin erstreckt und die Fixierung der Körper (31) am Fahrgestellboden (T) durch Einrasten am Fahrgestellboden (T) ermöglicht,
- Der genannte Fixiervorsprung (35) erstreckt sich in einer L-Form und durchgeht das Loch am Fahrgestellboden (T) und ermöglicht die Fixierung der Körper (31) auf dem Fahrgestellboden (T).

2. Rücksitz-Sicherheitsanordnung (1) nach Anspruch 1, **gekennzeichnet durch** mindestens ein Polster (32), das in die Form eines Buckels ist, der an einem Teil des Körpers (31) in der Nähe des Fahrgestellbodens (T) gelegen ist und auf den das Verbindungselement (2) auftrifft, wenn es sich zum Fahrgestellboden (T) hin bewegt.

3. Rücksitz-Sicherheitsanordnung (1) nach Anspruch 1, **gekennzeichnet durch** mindestens eine gekrümmte Struktur (33), die in Form einer Krümmung an den Teilen des Körpers (31) ist, die den Fahrgestellboden (T) berühren, und die eine widerstandsfähigere Struktur auf den Oberflächen des Körpers (31) gebildet, die dem Fahrgestellboden (T) entsprechen.

4. Rücksitz-Sicherheitsanordnung (1) nach Anspruch 1, **gekennzeichnet durch** mindestens ein Fixierungsloch (34), das in die Form eines Lochs ist, das sich an der Oberfläche gelegt, wo der Körper (31) den Fahrgestellboden (T) berührt und das die Fixierung des Körpers (34) auf dem Fahrgestellboden (T) mittels der durchgehenden Verbindungselemente ermöglicht.

5. Rücksitz-Sicherheitsanordnung (1) nach Anspruch 4, **dadurch gekennzeichnet, dass** das Verbindungselement, das durch das Fixierungsloch (34) durchgeht, ein Bolzen ist.

6. Rücksitz-Sicherheitsanordnung (1) nach Anspruch 1, **gekennzeichnet durch** das Verbindungselement (2), das mit dem Fahrzeugrahmen (K) von zwei Enden desselben aus verbunden ist und das U-förmig ist, wenn sich die beiden Enden, die sich von dem Fahrzeugrahmen (K), an dem es fixiert ist, zum Fahrgestellboden (T) hin erstrecken, zusammenfügen.

7. Rücksitz-Sicherheitsanordnung (1) nach Anspruch 2, **dadurch gekennzeichnet, dass** das Polster, auf das das Verbindungselement auftrifft, aus Kunststoffmaterial besteht.

8. Rücksitz-Sicherheitsanordnung (1) nach Anspruch 1, **gekennzeichnet durch** das Klemmensystem, das auf die Aussparung (311) gesetzt wird und das verhindert, dass das Verbindungselement bei kleinen intensiven Bewegungen aus der Aussparung verschoben wird.

## Revendications

1. Ensemble de sécurité pour les sièges arrière (1), qui empêche le déplacement du siège par rapport au plancher du châssis (T) en raison des charges agissant sur les cadres des sièges du véhicule (K) et comprenant,
- au moins un organe de liaison (2), qui est relié d'un de ses côtés à la partie du cadre du siège (K) située près du plancher du châssis (T), et qui s'étend du cadre du siège (K) auquel il est relié vers le plancher du châssis (T),
- au moins une inclinaison de guidage (21) qui est formée sur l'organe de liaison (2) par un processus de flexion et qui permet à l'organe de liaison (2) de s'étendre vers le plancher du châssis (T) selon un angle différent
- au moins un organe fixe (3) ; qui est placé sur le plancher du châssis (T) où s'étend l'organe de liaison (2), et qui comprend au moins un corps (31) qui comprend au moins un évidement (311) qui est formé est situé sur le corps (31) dont la partie la plus éloignée de la section du coffre du véhicule permet le passage de l'organe de liaison (2) et est d'une taille supérieure à celle de l'organe de liaison (2) ; et qui transfère les forces provenant de l'organe de liaison (2) au châssis du véhicule, et
**caractérisé par**
- au moins une saillie de fixation (35) qui se présente sous la forme d'une extension qui s'étend du corps (31) vers le plancher du châssis (T) et qui permet de fixer le corps (31) sur le plancher du châssis (T) en s'engageant sur le plancher du châssis (T),
- Ladite saillie de fixation (35) s'étendant en forme de L et passant à travers le trou du plancher du châssis (T) et permettant de fixer le corps (31) sur le plancher du châssis (T).

2. Ensemble de sécurité pour les sièges arrière (1) selon la revendication 1, **caractérisé par** au moins un tampon (32) qui se présente sous la forme d'une bosse située sur une partie du corps (31) près du plancher du châssis (T) et sur lequel l'organe de liaison (2) frappe lorsqu'il se déplace vers le plancher du châssis (T).

3. Ensemble de sécurité pour les sièges arrière (1) selon la revendication 1, **caractérisé par** au moins une structure incurvée (33) qui se présente sous la forme d'un coude au niveau des parties du corps (31) en contact avec le plancher du châssis (T) et qui forme une structure plus résistante sur les surfaces du corps (31) correspondant au plancher du châssis (T).

4. Ensemble de sécurité pour les sièges arrière (1) selon la revendication 1, **caractérisé par** au moins un trou de fixation (34) qui se présente sous la forme d'un trou situé sur la surface où le corps (31) est en contact avec le plancher du châssis (T) et qui permet de fixer le corps (34) sur le plancher du châssis (T) au moyen des éléments de liaison qui le traversent.

5. Ensemble de sécurité pour les sièges arrière (1) selon la revendication 4, **caractérisé en ce que** l'élément de liaison passant par le trou de fixation (34) est un boulon.

6. Ensemble de sécurité pour les sièges arrière (1) selon la revendication 1, **caractérisé par** l'organe de liaison (2) qui est relié au châssis du véhicule (K) par deux extrémités et qui est en forme de U lorsque les deux extrémités s'étendant du châssis du véhicule (K) auquel il est fixé vers le plancher du châssis (T) s'unissent.

7. Ensemble de sécurité pour les sièges arrière (1) selon la revendication 2, **caractérisé en ce que** le tampon sur lequel l'organe de liaison frappe est en matière plastique.

8. Ensemble de sécurité pour les sièges arrière (1) selon la revendication 1, **caractérisé par** le système de clips qui est placé sur l'évidement (311) et qui empêche l'élément de liaison de se déplacer de l'évidement par de petits mouvements intenses.
